(19) Europäisches Patentamt
European Patent Office
Office européen des brevets

(11) **EP 4 625 009 A1**

(12) **EUROPEAN PATENT APPLICATION**
published in accordance with Art. 153(4) EPC

(43) Date of publication:
**01.10.2025 Bulletin 2025/40**

(21) Application number: **24899274.5**

(22) Date of filing: **22.07.2024**

(51) International Patent Classification (IPC):
**G02B 6/028** (2006.01)

(86) International application number:
**PCT/CN2024/106751**

(87) International publication number:
**WO 2025/118623 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 CN 202311648463**

(71) Applicants:
• **Zhongtian Technology Advanced Materials Co., Ltd.**
**Nantong, Jiangsu 226000 (CN)**
• **Jiangsu Zhongtian Technology Co., Ltd.**
**Nantong, Jiangsu 226000 (CN)**
• **Zhongtian Technology Fibre Optics Co., Ltd.**
**Nantong, Jiangsu 226000 (CN)**

(72) Inventors:
• **XU, Weiwei**
**Nantong, Jiangsu 226000 (CN)**
• **SHEN, Yichun**
**Nantong, Jiangsu 226000 (CN)**
• **JIANG, Xinli**
**Nantong, Jiangsu 226000 (CN)**
• **QIN, Yu**
**Nantong, Jiangsu 226000 (CN)**
• **GAO, Yang**
**Nantong, Jiangsu 226000 (CN)**
• **XU, Xikai**
**Nantong, Jiangsu 226000 (CN)**
• **QIAN, Benhua**
**Nantong, Jiangsu 226000 (CN)**
• **ZHOU, Hui**
**Nantong, Jiangsu 226000 (CN)**

(74) Representative: **Greengrass, Matthew James**
**Withers & Rogers LLP**
**2 London Bridge**
**London SE1 9RA (GB)**

(54) **HIGH-BANDWIDTH MULTIMODE OPTICAL FIBER**

(57) The present application provides a high-bandwidth multimode optical fiber. **In** a direction from the center of the high-bandwidth multimode optical fiber to the outer wall of the high-bandwidth multimode optical fiber, the high-bandwidth multimode optical fiber comprises a core layer, an inner cladding layer, a barrier layer, a depressed layer and an outer cladding layer that are sequentially cladded; the refraction index of the core layer is distributed a power-exponential function in the direction from the center to the outer wall, and the center of the core layer has the largest refraction index; the refraction index of the inner cladding layer decreases gradually in the direction from the center to the outer wall; and the refraction index of the barrier layer is smaller than the refraction index of the inner cladding layer and greater than the refraction index of the depressed layer. The high-bandwidth multimode optical fiber provided by the present application has good bandwidth performance.

Fig. 3

**Description**

The present application claims the priority from Chinese Patent Application No. 202311648463.4 filed with China National Intellectual Property Administration on December 5, 2023 and titled as "High-Bandwidth Multimode Optical Fiber", the entire content of which is incorporated herein by reference.

**Technical Field**

The present application relates to the technical field of optical fibers, and more specifically relates to a high-bandwidth multimode optical fiber.

**Background Art**

A multimode optical fiber is an optical fiber that transmits in multiple modes at a given working wavelength. Multimode optical fibers are widely used in medium and short distance network systems, especially in data centers, because of its low system cost and high transmission capacity.

In the related art, a multimode optical fiber comprises a core layer, an inner cladding layer, a depressed layer and an outer cladding layer sequentially from the center of the optical fiber to the outside. The refraction index of the core layer is distributed in a power-exponential function in a direction from the center to the outer wall, and the refraction index of the inner cladding layer decreases gradually in the direction from the center to the outer wall.

However, the bandwidth performance of the above-mentioned multimode optical fiber is poor.

**Summary of the Invention**

The objective of the present application is to provide a high-bandwidth multimode optical fiber with good bandwidth performance.

The present application provides a high-bandwidth multimode optical fiber, which comprises a core layer, an inner cladding layer, a barrier layer, a depressed layer and an outer cladding layer which are sequentially cladded in a direction from the center of the high-bandwidth multimode optical fiber to the outer wall of the high-bandwidth multimode optical fiber;

the refraction index of the core layer is distributed in a power-exponential function in the direction from the center to the outer wall, the center of the core layer has the highest refraction index; the refraction index of the inner cladding layer decreases gradually in the direction from the center to the outer wall; and the refraction index of the barrier layer is smaller than the refraction index of the inner cladding layer and greater than the refraction index of the depressed layer.

In a possible implementation, the barrier layer of the high-bandwidth multimode optical fiber provided by the present application comprises a first barrier layer, and the first barrier layer is cladded on the outer wall of the inner cladding layer.

In a possible implementation, the barrier layer of the high-bandwidth multimode optical fiber provided by the present application comprises two layers including a first barrier layer and a second barrier layer, wherein the second barrier layer is cladded on the outer wall of the inner cladding layer, and the first barrier layer is cladded on the outer wall of the second barrier layer.

In a possible implementation, the refraction index of the first barrier layer of the high-bandwidth multimode optical fiber provided by the present application is equal to the refraction index of the outer cladding layer.

In a possible implementation, in the high-bandwidth multimode optical fiber provided by the present application, the cross section of the first barrier layer is in an annular shape in an extending direction perpendicular to the high-bandwidth multimode optical fiber, and a spacing between the outer wall and the inner wall of the first barrier layer in a radial direction is 0 to 6 $\mu$m.

In a possible implementation, in the high-bandwidth multimode optical fiber provided by the present application, a difference value between the refraction index of the second barrier layer and the refraction index of the outer cladding layer is not greater than 0.2%, and the refraction index of the second barrier layer is not greater than the refraction index of the outer cladding layer.

In a possible implementation, in the high-bandwidth multimode optical fiber provided by the present application, the material of the second barrier layer comprises silicon dioxide and fluorine, and the molar doping concentration of the fluorine relative to the silicon dioxide is 0.01% to 0.5%.

In a possible implementation, in the high-bandwidth multimode optical fiber provided by the present application, the cross section of the second barrier layer is in an annular shape in the extending direction perpendicular to the high-bandwidth multimode optical fiber, and a spacing between the outer wall and the inner wall of the second barrier layer in radial direction is 0.5 to 3 $\mu$m.

In a possible implementation, in the high-bandwidth multimode optical fiber provided by the present application, the cross section of the core layer is in a circular shape in an extending direction perpendicular to the high-bandwidth multimode optical fiber, and the radius of the core layer is 22 to 32 $\mu$m.

In a possible implementation, in the high-bandwidth multimode optical fiber provided by the present application, a difference value between the refraction index of the core layer and the refraction index of the outer cladding layer is 0.9% to 1.1%, and the refraction index of the core layer is greater than the refraction index of the outer cladding layer.

In a possible implementation, in the high-bandwidth multimode optical fiber provided by the present application, the material of the core layer comprises silicon dioxide, germanium dioxide, fluorine and phosphorus, wherein the molar doping concentration of the fluorine relative to the silicon dioxide is 0.01% to 0.35%, the molar doping concentration of the phosphorus relative to the silicon dioxide is 0.01% to 0.3%, and the molar doping concentration of the germanium dioxide relative to the silicon dioxide is 3% to 20%.

In a possible implementation, in the high-bandwidth multimode optical fiber provided by the present application, the cross section of the inner cladding layer is in an annular shape in the extending direction perpendicular to the high-bandwidth multimode optical fiber, and a spacing between the outer wall and the inner wall of the inner cladding layer in a radial direction is 0.5 to 6 $\mu$m.

In a possible implementation, in the high-bandwidth multimode optical fiber provided by the present application, a difference value between the refraction index of the inner wall of the inner cladding layer and the refraction index of the outer cladding layer is 0.001% to 0.1%, and the refraction index of the inner wall of the inner cladding layer is greater than the refraction index of the outer cladding layer;
a difference value between the refraction index of the outer wall of the inner cladding layer and the refraction index of the outer cladding layer is 0% to 0.35%.

In a possible implementation, in the high-bandwidth multimode optical fiber provided by the present application, the material of the inner cladding layer comprises silicon dioxide, germanium dioxide and fluorine, wherein the molar doping concentration of the fluorine relative to the silicon dioxide is 0.01% to 0.35%, and the molar doping concentration of the germanium dioxide relative to the silicon dioxide is 0.2% to 4%.

In a possible implementation, in the high-bandwidth multimode optical fiber provided by the present application, the cross section of the depressed layer is in an annular shape in the extending direction perpendicular to the high-bandwidth multimode optical fiber, and a spacing between the outer wall and the inner wall of the depressed layer in a radial direction is 2.5 to 6.5 $\mu$m.

In a possible implementation, in the high-bandwidth multimode optical fiber provided by the present application, a difference value between the refraction index of the depressed layer and the refraction index of the outer cladding layer is 0.3% to 0.6%, and the refraction index of the depressed layer is smaller than the refraction index of the outer cladding layer.

In a possible implementation, in the high-bandwidth multimode optical fiber provided by the present application, the material of the depressed layer comprises silicon dioxide and fluorine, and the molar doping concentration of the fluorine relative to the silicon dioxide is 0.5% to 1.5%.

With the above technical solution, the high-bandwidth multimode optical fiber provided by the present application is provided with an inner cladding layer and a barrier layer, the refraction index of the inner cladding layer gradually decreases in the direction from the center to the outer wall, and the refraction index of the barrier layer is smaller than the refraction index of the inner cladding layer but greater than the refraction index of the depressed layer, so that the refraction index gradually transits between the core layer and the depressed layer, and any abrupt change of the refraction index between the core layer and the depressed layer is avoided, thereby the interference of the core-cladding boundary on the transmission rates in higher-order modes is reduced, the effect of the core-cladding interface on the transmission rates in high-order modes is effectively controlled, the delays in the modes are reduced, so that transmission bandwidth of the optical fiber is improved and high bandwidth features are obtained. Moreover, by means of the barrier layer, the problem that the fluorine in the depressed layer will diffuse into the inner cladding layer at a high temperature and affect the refraction index of the inner cladding layer can be solved, thereby the bandwidth performance is improved.

**Brief Description of Drawings**

Fig. 1 is a DMD diagram of a multimode optical fiber in the related art;

Fig. 2 is a schematic structural diagram of a high-bandwidth multimode optical fiber provided in an embodiment of the present application;

Fig. 3 is a graph showing the change of refraction index of the high-bandwidth multimode optical fiber provided in the embodiment of the present application along the cross section perpendicular to the extending direction;

Fig. 4 is a DMD diagram of a high-bandwidth multimode optical fiber provided in an embodiment of the present application;

Fig. 5 is a graph showing the change of refraction index of the high-bandwidth multimode optical fiber provided in an embodiment 1 of the present application along the cross section perpendicular to the extending direction;

Fig. 6 is a graph showing the change of refraction index of the high-bandwidth multimode optical fiber provided in an embodiment 2 of the present application along the cross section perpendicular to the extending direction.

Description of reference numerals in figures:

100 - core layer;

200 - inner cladding layer;

300 - barrier layer;

310 - first barrier layer;

320 - second barrier layer;

400 - depressed layer;

500 - outer cladding layer.

## Embodiments

In the description of the present application, unless otherwise specified and defined, the terms "mounting", "connection", "coupling" should be broadly understood; for example, a connection may be a fixed connection, an indirect connection via an intermediate medium, internal communication between two elements or interaction relationship between two elements. A person of ordinary skills in the art can understand the specific meanings of the terms in the present application according to the context.

In the description of the present application, the orientations or positional relations indicated by terms "upper", "lower", "front", "back", "vertical", "horizontal", "top", "bottom", "inner" and "outer", etc., are based on the orientations or positional relations indicated on the accompanying drawings. They are used only to ease and simplify the description of the present application, instead of indicating or implying that the involved device or element must have a specific orientation or must be constructed and operated in a specific orientation. Therefore, the use of these terms shall not be deemed as constituting any limitation on the present application.

The terms "first", "second" and "third", etc. (if any) in the description, claims, and above-mentioned accompanying drawings of the present application are intended to differentiate similar objects, and may not be necessarily used to describe a specific order or precedence. It should be understood that the data used in such a manner is interchangeable in appropriate situations, so that the embodiments of the present application described herein can be implemented in an order besides the order illustrated or described herein.

Moreover, the terms "comprise" and "have" and any variant of them are intended to encompass non-exclusive inclusions, for example, a process, method, system, product or maintenance tool that includes a series of steps or units is not limited to the steps or units that are clearly listed, but may include other steps or units that are not listed clearly or intrinsic to the process, method, product or maintenance tool.

To make the objective, technical solution, and advantages of the embodiments of the present application understood more clearly, hereunder the technical solution in the embodiments of the present application will be detailed clearly and completely, in conjunction with the accompanying drawings in the embodiments of the present application. Apparently, the embodiments described here are only some embodiments of the present application rather than all possible embodiments of the present application. All other embodiments obtained by those of ordinary skill in the art based on the embodiments of the present application without expending any creative labor all fall in the protection scope of the present application.

In the related art, a multimode optical fiber comprises a core layer, an inner cladding layer, a depressed layer and an outer cladding layer sequentially from the center of the optical fiber to the outside, wherein the refraction index of the core layer is distributed in a power-exponential function in a direction from the center to the outer wall, the refraction index of the inner cladding layer decreases gradually in the direction from the center to the outer wall, and the refraction index of the depressed layer is smaller than the refraction index of the outer cladding layer.

It can be understood that by adding a depressed layer, the high-order modes will be effectively confined to the depressed layer when the optical fiber is macrobending, and the leakage of the high-order modes will be reduced, thereby the bending loss of the optical fiber can be reduced.

In addition, there are hundreds of common transmission modes in a multimode optical fiber. Owing to the fact that each mode has a different transmission path in the optical fiber, the optical transmission paths of pulse signal components in different modes are not equal, leading to that the pulse signals received at the output side are broadened and signal distortion occurs. In order to reduce the intermodal dispersion of the optical fiber, it is necessary to design the refraction index profile of the core layer into a parabolic structure that has a power exponential distribution, and balance the optical paths of optical pulses in different modes through refraction index adjustment, so as to achieve the object of reducing the time delay difference between pulses and improving the bandwidth.

Specifically, the relationship between the radial refraction index n of the core layer and the radius r of the optical fiber can be described by the following expression:

$$n_r = \sqrt{n_0{}^2 \left[ 1 - 2\Delta \left( \frac{r}{b} \right)^\alpha \right]}$$

Where $n_0$ is the refraction index at the center of the core layer, b is the radius of the core layer, $\Delta$ is the difference value between the refraction index at the center of the core layer and the refraction index at the outer wall of the core layer, and $\alpha$ is the distribution index of the core layer. The value of $\alpha$ directly determines the distribution of the refraction index of the core layer, thus affects the propagation speed of light in different modes. Therefore, the intermodal dispersion can be effectively controlled by adjusting the $\alpha$ value, thereby the bandwidth performance can be optimized.

An inner cladding layer is arranged between the core layer and the depressed layer, and the refraction index of the inner cladding layer is negatively correlated with the radius; thus, the refraction index gradually transits between the core layer and the depressed layer, and any abrupt change of the refraction index between the core layer and the depressed layer is avoided, thereby the interference of the core-cladding boundary on the transmission rates in high-order modes is reduced, the effect of the core-cladding interface on the transmission rates in high-order modes is effectively controlled, the delays in modes are reduced, so that the transmission bandwidth of the optical fiber is improved, and high-bandwidth features are obtained.

The bandwidth of the multimode optical fiber is a key index parameter for evaluating the signal rate of multimode transmission. A conventional multimode optical fiber utilizes a Light-Emitting Diode (LED) as the light source, and the Over-Filled Launch (OFL) bandwidth of the multimode optical fiber is an indicator for the bandwidth performance of the optical fiber in the LED light environment, and usually can be measured by means of time domain (pulse broadening) and frequency domain (sweep frequency) methods. For OM3 or superior high-speed transmission optical fibers, a Vertical Cavity Surface Emitting Laser (VCSEL) light source is used for optical fiber filling. Such a light source for high-bandwidth applications exhibits uneven emission on the radial surface, and Effective Mode Bandwidth (EMB) is more suitable for it. An EMB testing method is to combine the measured Digital Micromirror Device (DMD) output delay response of the optical fiber with the typical light intensity distribution characteristics of a VCSEL laser working at 850 nm wavelength, and the bandwidth of the VCSEL optical fiber system is calculated and obtained with dispersion delay in modes, so as to determine the performance of the optical fiber in a 10 Gbit/s Ethernet. The DMD test is to inject light pulses with a given wavelength $\lambda$ at different radial offset positions. Owing to the difference in the radial refraction index, the optical path of each pulse is different. After the light pulses are transmitted through an optical fiber with a given length L, the response of the optical fiber to each pulse is measured to obtain a DMD diagram. The pulse center delay is calculated as follows:

$$T_i = \frac{\int_0^{PW} P_i(t)\, t\, dt}{\int_0^{PW} P(t)\, t\, dt}$$

$$C_i = T_i - T_0$$

Wherein i = 0 to 25, and i represents the $i^{th}$ pulse, i = 0 represents the fiber center pulse; PW represents the tested pulse width, $P_i(t)$ represents the power of the $i^{th}$ pulse, $T_i$ represents the pulse center of the $i^{th}$ pulse, $C_i$ represents the pulse center delay, P(t) represents the power of a standard pulse, which is equal to $P_0(t)$, and t represents time.

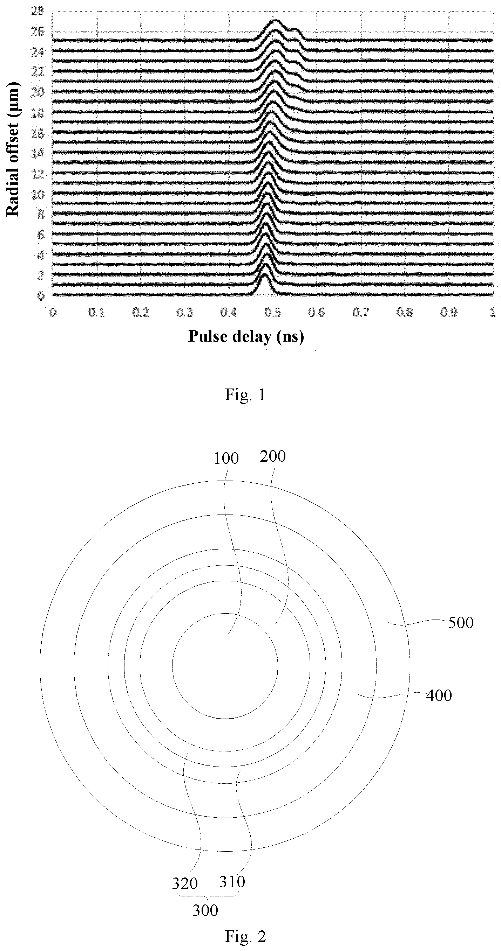

Fig. 1 is a DMD diagram of a multimode optical fiber in the related art. As shown in Fig. 1, the consistency of the X-coordinates (pulse center delays) corresponding to the peaks of various curves is poor under different radial offsets, and the curve has two obvious peaks when the radial offset is greater than 20.

That is to say, the transmission rates in high-order modes at the boundary of the core layer are affected by the refraction index difference at the core-cladding boundary (the boundary between the core layer and the depressed layer), resulting in an increased time delay at the core-cladding boundary. How to effectively control the pulse rate at the core-cladding boundary is a key problem to be solved in the design of the present application.

Through analysis, it is found that in the manufacturing process of a multimode optical fiber in the related art, the concentration of fluorine in the depressed layer is relatively high, and the fluorine will diffuse into the inner cladding layer under the action of high temperature, so that the refraction index is changed at the interface between the inner cladding layer and the depressed layer owing to the change of fluorine concentration. That is to say, the actual refraction index at the interface between the inner cladding layer and the depressed layer after processing is deviated from the target refraction index, resulting in a limited accuracy of pulse delay control at the boundary. Thus, the inner cladding layer has a poor effect on the improvement of the bandwidth of the multimode optical fiber. Therefore, the multimode optical fiber in the related art has a technical problem of poor bandwidth performance.

On that basis, the high-bandwidth multimode optical fiber provided by the present application solves the problem that the fluorine in the depressed layer will diffuse into the inner cladding layer under the action of high temperature and affect the refraction index of the inner cladding layer by providing a barrier layer arranged between the inner cladding layer and the depressed layer, thereby improving the bandwidth performance.

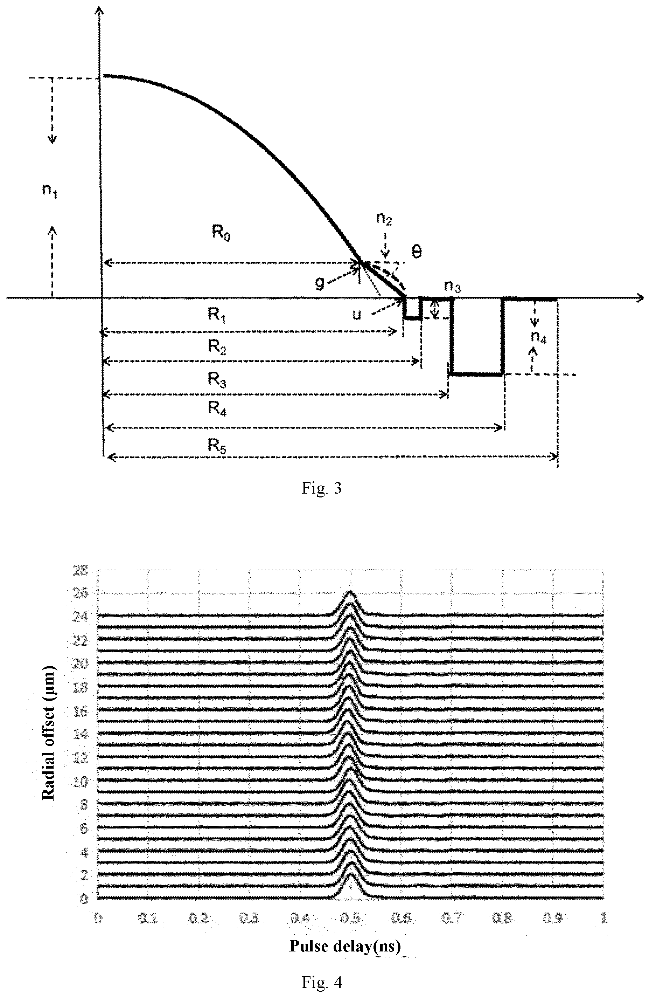

Fig. 2 is a schematic structural diagram of a high-bandwidth multimode optical fiber provided in an embodiment of the present application; Fig. 3 is a graph showing the change of the refraction index of the high-bandwidth multimode optical fiber provided in the embodiment of the present application along a cross section perpendicular to the extending direction; and Fig. 4 is a DMD diagram of the high-bandwidth multimode optical fiber provided in the embodiment of the present application.

As shown in Figs. 2-4, the high-bandwidth multimode optical fiber provided by the present disclosure comprises a core layer 100, an inner cladding layer 200, a barrier layer 300, a depressed layer 400 and an outer cladding layer 500 cladded sequentially in a direction from the center of the high-bandwidth multimode optical fiber to the outer wall of the high-bandwidth multimode optical fiber.

The refraction index of the core layer 100 is distributed in a power-exponential function in the direction from the center to the outer wall, and the center of the core layer 100 has the largest refraction index; the refraction index of the inner cladding layer 200 decreases gradually in the direction from the center to the outer wall; and the refraction index of the barrier layer 300 is smaller than the refraction index of the inner cladding layer 200 and greater than the refraction index of the depressed layer 400.

It should be noted that the refraction index of the outer cladding layer 500 is equal to the refraction index of silicon dioxide, and the difference value of refraction index is calculated by the following expression:

$$n_i = \frac{|N_i - 1.4572|}{1.4572} \times 100\%$$

Where $n_1$ is the difference value between the refraction index $N_1$ at the center of the core layer 100 and the refraction index of the outer cladding layer 500, $n_2$ is the difference value between the refraction index $N_2$ of the outer wall of the core layer 100 and the refraction index of the outer cladding layer 500, $n_3$ is the difference value between the refraction index $N_3$ of the second barrier layer and the refraction index of the outer cladding layer 500, $n_4$ is the difference value between the refraction index $N_4$ of the depressed layer 400 and the refraction index of the outer cladding layer 500, $n_g$ is the difference value between the refraction index of the inner wall of the inner cladding layer 200 (at the position indicated by the point g in the figure) and the refraction index of the outer cladding layer 500, and $n_u$ is the difference value between the refraction index of the outer wall of the inner cladding layer 200 (at the position indicated by the point u in the figure) and the refraction index of the outer cladding layer 500.

Wherein, $R_0$ is the radius of the core layer 100, $R_1$ is the radius of the outer wall of the inner cladding layer lay 200, $R_2$ is the radius of the outer wall of the second barrier layer, $R_3$ is the radius of the outer wall of the first barrier layer, $R_4$ is the radius of the outer wall of the depressed layer 400, and $R_5$ is the radius of the outer wall of the outer cladding layer 500.

It can be understood that by providing an inner cladding layer 200 and a barrier layer 300, a gradually decreased refraction index of the inner cladding layer 200 in the direction from the center to the outer wall, and a refraction index of the barrier layer 300 smaller than the refraction index of the inner cladding layer 200 but greater than the refraction index of the depressed layer 400, the refraction index gradually transits between the core layer 100 and the depressed layer 400, and any abrupt change of the refraction index between the core layer 100 and the depressed layer 400 is avoided, thereby the interference of the core-cladding boundary (the boundary between the core layer 100 and the depressed layer 400) on the transmission rates in high-order modes is improved, the effect of the core-cladding interface on the transmission rates in high-order modes is effectively controlled, the delays in modes are reduced, so that the optical fiber transmission bandwidth is improved and high bandwidth features are obtained. Moreover, the problem that the fluorine in the depressed layer 400 will diffuse into the inner cladding layer 200 under the action of a high temperature and affect the refraction index of the inner cladding layer 200 can be solved by providing the barrier layer 300, thereby the bandwidth performance of the high-bandwidth multimode optical fiber is improved.

Wherein, the refraction index of the inner cladding layer 200 gradually decreases in the direction from the center to the outer wall and has a linear or approximately parabolic distribution, and the included angle $\theta$ between the refraction index and the horizontal direction is smaller than 90 degrees.

The refraction index of the core layer 100 in the direction from the center to the outer wall is in a power exponential function distribution, and its parameter $\alpha$ depends on the operating wavelength. At an operating wavelength of 850 nm, $\alpha$ may ideally be 2 to 3. As an example, $\alpha$ may be 2.08.

Furthermore, at the wavelength of 850 nm, the bending loss of the high-bandwidth multimode optical fiber is smaller than or equal to 0.2 dB when it is loosely coiled in two turns in a radius of 7.5 mm, and the bending loss is smaller than or equal to 0.1 dB when the high-bandwidth multimode optical fiber is loosely coiled in two turns in a radius of 15 mm.

At a wavelength of 1300 nm, the bending loss of the high-bandwidth multimode optical fiber is smaller than or equal to 0.5 dB when it is loosely coiled in two turns in a radius of 7.5 mm, and the bending loss is smaller than or equal to 0.3 dB when the high-bandwidth multimode optical fiber is loosely coiled in two turns in a radius of 15 mm.

The high-bandwidth multimode optical fiber provided in this embodiment comprises a core layer 100, an inner cladding layer 200, a barrier layer 300, a depressed layer 400 and an outer cladding layer 500 cladded sequentially in a direction from the center of the high-bandwidth multimode optical fiber to the outer wall of the high-bandwidth multimode optical fiber. The refraction index of the core layer 100 is distributed in a power-exponential function in the direction from the center to the outer wall, and the center of the core layer 100 has the largest refraction index; the refraction index of the inner cladding layer 200 decreases gradually in the direction from the center to the outer wall; and the refraction index of the barrier layer 300 is smaller than the refraction index of the inner cladding layer 200 and greater than the refraction index of the depressed layer 400. Thus, the high-bandwidth multimode optical fiber has a high bandwidth and an excellent bending resistance property.

In a possible implementation, the barrier layer 300 comprises a first barrier layer 310 cladded on the outer wall of the inner cladding layer 200.

Specifically, the first barrier layer 310 is a silicon dioxide layer, and the refraction index of the first barrier layer 310 is equal to the refraction index of the outer cladding layer 500. Thus, by providing the first barrier layer 310, the fluorine in the depressed layer 400 can be effectively prevented from diffusing into the inner cladding layer 200 under the action of high temperature.

In another possible implementation, the barrier layer 300 comprises a first barrier layer 310 and a second barrier layer 320, the second barrier layer 320 is cladded on the outer wall of the inner cladding layer 200, and the first barrier layer 310 is cladded on the outer wall of the second barrier layer 320. Thus, the barrier layer 300 has a good barrier effect, which is conducive to further improving the bandwidth performance of the high-bandwidth multimode optical fiber. The second barrier layer 320 may further assist in adjusting and controlling the bandwidths in high-order modes at the core-cladding boundary, and make up for the defect that the inner cladding layer 200 can't meet the design accuracy due to the limitation of the rod-making process.

Specifically, the first barrier layer 310 is a silicon dioxide layer, and the refraction index of the first barrier layer 310 is equal to the refraction index of the outer cladding layer 500.

In a possible implementation, the cross section of the first barrier layer 310 is in an annular shape in an extending direction perpendicular to the high-bandwidth multimode optical fiber, and a spacing between the outer wall and the inner wall of the first barrier layer 310 in a radial direction is 0 to 6 $\mu$m. That is to say, $R_3$-$R_2$ is equal to 0 to 6 $\mu$m. As an example, $R_3$-$R_2$ may be equal to 3 $\mu$m.

It can be understood that the barrier layer 300 comprises a second barrier layer 320 when $R_3$-$R_2$ is equal to 0 $\mu$m.

In this embodiment, the difference value between the refraction index of the second barrier layer 320 and the refraction index of the outer cladding layer 500 is 0% to 0.2%, and the refraction index of the second barrier layer 320 is not greater than the refraction index of the outer cladding layer 500.

Exemplarily, the difference value between the refraction index of the second barrier layer 320 and the refraction index of the outer cladding layer 500 is 0.1%.

In some embodiments, the material of the second barrier layer 320 comprises silicon dioxide and fluorine, and the molar doping concentration of the fluorine relative to the silicon dioxide is 0.01% to 0.5%. Exemplarily, the molar doping concentration of fluorine relative to silicon dioxide is 0.3%.

Specifically, the cross section of the second barrier layer 320 is in an annular shape in the extending direction perpendicular to the high-bandwidth multimode optical fiber, and a spacing between the outer wall and the inner wall of the second barrier layer 320 in a radial direction is 0.5 to 3 $\mu$m. That is to say, $R_2$-$R_1$ is equal to 0.5 to 3 $\mu$m. Exemplarily, $R_2$-$R_1$ may be equal to 2 $\mu$m.

In a possible implementation, the cross section of the core layer 100 is in a circular shape in the extending direction perpendicular to the high-bandwidth multimode optical fiber, and the radius of the core layer 100 is 22 to 32 $\mu$m. Wherein, the radius of the core layer 100 is 28 $\mu$m.

Specifically, a difference value between the refraction index of the core layer 100 and the refraction index of the outer cladding layer 500 is 0.9% to 1.1%, and the refraction index of the core layer 100 is greater than the refraction index of the outer cladding layer 500 is 0.9% to 1.1%, and the refraction index of the core layer 100 and the refraction index of the core layer 100 is greater than the refraction index of the outer cladding layer 500 is 1%.

Wherein, the material of the core layer 100 comprises silicon dioxide, germanium dioxide, fluorine and phosphorus, and the molar doping concentration of the fluorine relative to the silicon dioxide is 0.01% to 0.35%, the molar doping concentration of the phosphorus relative to the silicon dioxide is 0.01% to 0.3%, and the molar doping concentration of the germanium dioxide relative to the silicon dioxide is 3% to 20%.

It should be noted that the core layer 100 may be processed through a Modified Chemical Vapor Deposition (MCVD) or Plasma Chemical Vapor Deposition (PCVD) in-pipe rod making process.

In some embodiments, the cross section of the inner cladding layer 200 is in an annular shape in the extending direction perpendicular to the high-bandwidth multimode optical fiber, and a spacing between the outer wall and the inner wall of the inner cladding layer 200 in a radial direction is 0.5 to 6 $\mu$m. That is to say, $R_1$-$R_2$ is equal to 0.5 to 6 $\mu$m. Exemplarily, $R_1$-$R_2$ may be equal to 3 $\mu$m.

As shown in Fig. 3, a difference value between the refraction index of the inner wall of the inner cladding layer 200 and the refraction index of the outer cladding layer 500 is 0.001% to 0.1%, and the refraction index of the inner wall of the inner cladding layer 200 is greater than the refraction index of the outer cladding layer 500. Exemplarily, the difference value between the refraction index of the inner wall of the inner cladding layer 200 and the refraction index of the outer cladding layer 500 is 0.05%.

The difference value between the refraction index of the outer wall of the inner cladding layer 200 and the refraction index of the outer cladding layer 500 is 0% to 0.35%. The refraction index of the outer wall of the inner cladding layer 200 may be greater than the refraction index of the outer cladding layer 500, the refraction index of the outer wall of the inner cladding layer 200 may be equal to the refraction index of the outer cladding layer 500, and the refraction index of the outer wall of the inner cladding layer 200 may be smaller than the refraction index of the outer cladding layer 500. Exemplarily, the difference value between the refraction index of the outer wall of the inner cladding layer 200 and the refraction index of the outer cladding layer 500 is 0.2%.

Specifically, the material of the inner cladding layer 200 comprises silicon dioxide, germanium dioxide and fluorine, wherein the molar doping concentration of the fluorine relative to the silicon dioxide is 0.01% to 0.35%, and the molar doping concentration of the germanium dioxide relative to the silicon dioxide is 0.2% to 4%.

Exemplarily, the molar doping concentration of the fluorine to the silicon dioxide is 0.2%, and the molar doping concentration of the germanium dioxide relative to the silicon dioxide is 2%.

It should be noted that the points g and u can be adjusted along four dimensions in the coordinate axis directions, so that the bandwidth can be continuously adjusted. In view that the specific adjustment method is the same as that in the related art, the details of the adjustment are not described further in this embodiment.

In a possible implementation, the cross section of the depressed layer 400 is in an annular shape in an extending direction perpendicular to the high-bandwidth multimode optical fiber, and a spacing between the outer wall and the inner wall of the depressed layer 400 in a radial direction is 2.5 to 6.5 $\mu$m. That is to say, $R_4$-$R_3$ is equal to 2.5 to 6.5 $\mu$m. Exemplarily, $R_4$-$R_3$ is equal to 4 $\mu$m.

Specifically, a difference value between the refraction index of the depressed layer 400 and the refraction index of the outer cladding layer 500 is 0.3% to 0.6%, and the refraction index of the depressed layer 400 is smaller than the refraction index of the outer cladding layer 500.

Exemplarily, the difference value between the refraction index of the depressed layer and the refraction index of the outer cladding layer 500 is 0.45%.

Wherein, the material of the depressed layer 400 comprises silicon dioxide and fluorine, and the molar doping concentration of the fluorine relative to the silicon dioxide is 0.5% to 1.5%.

Exemplarily, the molar doping concentration of fluorine relative to silicon dioxide is 1%.

Specific embodiments of the high-bandwidth multimode optical fiber will be described below.

Example 1

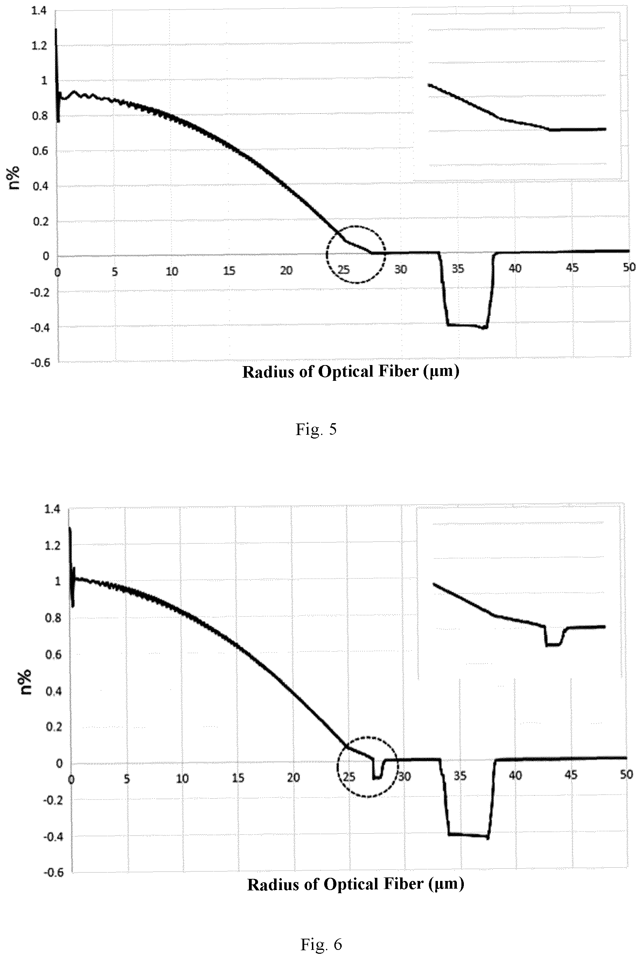

Fig. 5 is a graph showing the change of refraction index of the high-bandwidth multimode optical fiber provided in an Example 1 of the present application along the cross section perpendicular to the extending direction.

As shown in Fig. 5, the high-bandwidth multimode optical fiber comprises a core layer 100, an inner cladding layer 200, a first barrier layer 310, a depressed layer 400 and an outer cladding layer 500, and the refraction index of the core layer 100 is parabolically distributed in the direction from the center to the outer wall. The difference value $n_1$ between the

refraction index of the center of the core layer 100 and the refraction index of the outer cladding layer 500 is 0.92%, the difference value $n_g$ between the refraction index of the boundary point g between the inner cladding layer 200 and the core layer 100 and the refraction index of the outer cladding layer 500 is 0.07%, the difference value $n_u$ between the refraction index of the boundary point u between the inner cladding layer 200 and the first barrier layer 310 and the refraction index of the outer cladding layer 500 is 0%, and the difference value $n_4$ between the refraction index of the depressed layer 400 and the refraction index of the outer cladding layer 500 is 0.41%. The radius $R_0$ of the core layer 100 is 25 $\mu$m, and the width of the inner cladding layer 200 is $R_1$-$R_0$, which is 2.5 $\mu$m. In this Example, the second barrier layer 320 is not provided, the width of the first barrier layer 310 is formed by outwardly extending the boundary of the inner cladding layer 200 by $R_3$-$R_1$ which is equal to 4.8 $\mu$m, and the width of the depressed layer 400 is $R_4$-$R_3$, which is equal to 4.5 $\mu$m. In this Example, the preformed rods may be prepared through MCVD or PCVD process.

According to the DMD test result, the effective mode bandwidth is calculated as 1,752 MHZ/km, the OFL bandwidth is 1,415 MHZ/km @850 and 579 MHZ/km @1,300, which meet the OM2+ bandwidth standard. The bending loss is 0.028 dB in R7.5-2 turns @850, 0.004 dB in R15-2 turns @850, 0.079 dB in R7.5-2 turns @1,300, and 0.018 dB in R15-2 turns @1,300.

Example 2

Fig. 6 is a graph showing the change of refraction index of the high-bandwidth multimode optical fiber provided in an Example 2 of the present application along the cross section perpendicular to the extending direction.

As shown in Fig. 6, the high-bandwidth multimode optical fiber comprises a core layer 100, an inner cladding layer 200, a second barrier layer 320, a first barrier layer 310, a depressed layer 400 and an outer cladding layer 500. The second barrier layer 320 is used for auxiliary compensation for high-order modes at the boundary.

The refraction index of the core layer 100 is parabolically distributed in the direction from the center to the outer wall. The difference value $n_1$ between the refraction index of the center of the core layer 100 and the refraction index of the outer cladding layer 500 is 0.92%, the difference value $n_g$ between the refraction index of the boundary point g between the inner cladding layer 200 and the core layer 100 and the refraction index of the outer cladding layer 500 is 0.07%, the difference value $n_u$ between the refraction index of the boundary point u between the inner cladding layer 200 and the second barrier layer 320 and the refraction index of the outer cladding layer 500 is 0%, the difference value $n_3$ between the refraction index of the second barrier layer 320 and the refraction index of the outer cladding layer 500 is -0.09%, and the difference value $n_4$ between the refraction index of the depressed layer 400 and the refraction index of the outer cladding layer 500 is 0.41%. The radius $R_0$ of the core layer 100 is 25 $\mu$m, the width of the inner cladding layer 200 is $R_1$-$R_0$, which is 2.5 $\mu$m, the width of the second barrier layer 320 is formed by outwardly extending the inner cladding layer 200 by $R_2$-$R_1$, which is 1 $\mu$m, the width of the first barrier layer 310 is formed by outwardly extending the boundary of the inner cladding layer 200 by $R_2$-$R_1$, which is 4.8 $\mu$m, and the width of the depressed layer 400 is $R_4$-$R_3$, which is 4.5 $\mu$m. In this Example, the preformed rods may be prepared through a MCVD or PCVD process.

According to the DMD test result, the effective mode bandwidth is calculated as 2,314 MHZ/km, the OFL bandwidth is 1,695 MHZ/km @850 and 604 MHZ/km @1,300, which meet the OM3 bandwidth standard. After the second barrier layer 320 is added, the effect of the first barrier layer 310 on the bandwidth in high-order modes at the boundary can be strengthened to some extent. The bending loss is 0.102 dB in R7.5-2 turns @850, 0.073 dB in R15-2 turns @850, 0.418 dB in R7.5-2 turns @1,300, and 0.111 dB in R15-2 turns @1,300. The additional second barrier layer 320 has little effect on the multimode bending resistance performance.

Example 3

On the basis of the design of the Example 2, the parameters of the inner cladding layer 200 and the second barrier layer 320 are adjusted in order to improve the bandwidth of optical fiber.

The high-bandwidth multimode optical fiber comprises a core layer 100, an inner cladding layer 200, a second barrier layer 320, a first barrier layer 310, a depressed layer 400 and an outer cladding layer 500, and the refraction index of the core layer 100 is parabolically distributed in the direction from the center to the outer wall. The difference value $n_1$ between the refraction index of the center of the core layer 100 and the refraction index of the outer cladding layer 500 is 0.95%, the difference value $n_g$ between the refraction index of the boundary point g between the inner cladding layer 200 and the core layer 100 and the refraction index of the outer cladding layer 500 is 0.085%, the difference value $n_u$ between the refraction index of the boundary point u between the inner cladding layer 200 and the second barrier layer 320 and the refraction index of the outer cladding layer 500 is 0.02%, the difference value $n_3$ between the refraction index of the second barrier layer 320 and the refraction index of the outer cladding layer 500 is 0.12%, and the difference value $n_4$ between the refraction index of the depressed layer 400 and the refraction index of the outer cladding layer 500 is 0.41%. The radius $R_0$ of the core layer 100 is 25.2 $\mu$m, the width of the inner cladding layer 200 is $R_1$-$R_0$, which is 3.2 $\mu$m, the width of the second barrier layer 320 is formed by outwardly extending the inner cladding layer 200 by $R_2$-$R_1$, which is 1.8 $\mu$m, the width of the first barrier layer 310 is formed by outwardly extending the boundary of the inner cladding layer 200 by $R_3$-$R_2$, which is 4.2 $\mu$m, and the width of the depressed layer 400 is $R_4$-$R_3$, which is 4.8 $\mu$m. In this Example, the preformed rods may be prepared through MCVD or PCVD process.

According to the DMD test result, the effective mode bandwidth is 5,726 MHZ/km, the OFL bandwidth is 3,961 MHZ/km @850 and 722 MHZ/km @1,300, which meet the OM4 bandwidth standard. The bending loss is 0.095 dB in R7.5-2 turns @850, 0.069 dB in R15-2 turns @850, 0.391 dB in R7.5-2 turns @1,300, and 0.103 dB in R15-2 turns @1,300.

Example 4

On the basis of the design of the Example 3, the depth of the depressed layer 400 is increased, and the design parameters of other layers are adjusted accordingly, so as to improve the bending resistance performance of the high-bandwidth multimode optical fiber and improve the bandwidth as well.

The high-bandwidth multimode optical fiber comprises a core layer 100, an inner cladding layer 200, a second barrier layer 320, a first barrier layer 310, a depressed layer 400 and an outer cladding layer 500, and the refraction index of the core layer 100 is parabolically distributed in the direction from the center to the outer wall. The difference value $n_1$ between the refraction index of the center of the core layer 100 and the refraction index of the outer cladding layer 500 is 1.08%, the difference value $n_g$ between the refraction index of boundary point g between the inner cladding layer 200 and the core layer 100 and the refraction index of the outer cladding layer 500 is 0.09%, the difference value $n_u$ between the refraction index of the boundary point u between the inner cladding layer 200 and the second barrier layer 320 and the refraction index of the outer cladding layer 500 is 0.03%, the difference value $n_3$ between the refraction index of the second barrier layer 320 and the refraction index of the outer cladding layer 500 is 0.16%, and the difference value $n_4$ between the refraction index of the depressed layer 400 and the refraction index of the outer cladding layer 500 is 0.58%. The radius $R_0$ of the core layer 100 is 25.5 $\mu$m, the width of the inner cladding layer 200 is $R_1$-$R_0$, which is 3.4 $\mu$m, the width of the second barrier layer 320 is formed by outwardly extending the inner cladding layer 200 by $R_2$-$R_1$, which is 2.2 $\mu$m, the width of the first barrier layer 310 is formed by outwardly extending the boundary of the inner cladding layer 200 by $R_3$-$R_2$, which is 4.3 $\mu$m, and the width of the depressed layer 400 is $R_4$-$R_3$, which is 5.2 $\mu$m. In this Example, the preformed rods may be prepared through MCVD or PCVD process.

According to the DMD test result, the effective mode bandwidth is calculated as 4,811 MHZ/km, the OFL bandwidth is 3,350 MHZ/km @850 and 783 MHZ/km @1,300, which meet the OM3 bandwidth standard; the effect on the bandwidth is increased after the depressed layer is deepened. The bending loss is 0.063 dB in R7.5-2 turns @850, 0.055 dB in R15-2 turns @850, 0.207 dB in R7.5-2 turns @1,300, and 0.044 dB in R15-2 turns @1,300.

Example 5

On the basis of the design of the Example 5, the parameters of the inner cladding layer 200, the second barrier layer 320 and the first barrier layer 310 are further adjusted to improve the bandwidth of optical fiber.

The multimode optical fiber comprises a core layer 100, an inner cladding layer 200, a second barrier layer 320, a first barrier layer 310, a depressed layer 400 and an outer cladding layer 500, and the refraction index of the core layer 100 is parabolically distributed in the direction from the center to the outer wall. The difference value $n_1$ between the refraction index of the center of the core layer 100 and the refraction index of the outer cladding layer 500 is 1.11%, the difference value $n_g$ between the refraction index of boundary point g between the inner cladding layer 200 and the core layer 100 and the refraction index of the outer cladding layer 500 is 0.088%, the difference value $n_u$ between the refraction index of the boundary point u between the inner cladding layer 200 and the second barrier layer 320 and the refraction index of the outer cladding layer 500 is 0.02%, the difference value $n_3$ between the refraction index of the second barrier layer 320 and the refraction index of the outer cladding layer 500 is 0.13%, and the difference value $n_4$ between the refraction index of the depressed layer 400 and the refraction index of the outer cladding layer 500 is 0.55%. The radius $R_0$ of the core layer 100 is 26.2 $\mu$m, the width of the inner cladding layer 200 is $R_1$-$R_0$, which is 3 $\mu$m, the width of the second barrier layer 320 is formed by outwardly extending the inner cladding layer 200 by $R_2$-$R_1$, which is 2.5 $\mu$m, the width of the first barrier layer 310 is formed by outwardly extending the boundary of the inner cladding layer 200 by $R_3$-$R_2$, which is 4.6 $\mu$m, and the width of the depressed layer 400 is $R_4$-$R_3$, which is 5 $\mu$m. In this Example, the preformed rods may be prepared through MCVD or PCVD process.

According to the DMD test result, the effective mode bandwidth is calculated as 7,139 MHZ/km, the OFL bandwidth is 4,017 MHZ/km @850 and 892 MHZ/km @1,300, which meet the OM4 bandwidth standard. The bending loss is 0.072 dB in R7.5-2 turns @850, 0.061 dB in R15-2 turns @850, 0.239 dB in R7.5-2 turns @1,300, and 0.057 dB in R15-2 turns @1,300.

Table 1 - Tested Performance of the Multimode Optical Fibers in Different Examples.

| Parameter | Unit | Example 1 | Example 2 | Example 3 | Example 4 | Example 5 |
|---|---|---|---|---|---|---|
| EMB850 | MHZ/km | 1752 | 2314 | 5726 | 4811 | 7139 |
| BW850 | MHZ/km | 1415 | 1695 | 3961 | 3350 | 4017 |
| BW1300 | MHZ/km | 579 | 604 | 722 | 783 | 892 |
| R7.5-2 turns @850 | Bending loss (dB) | 0.109 | 0.102 | 0.095 | 0.063 | 0.072 |
| R15-2 turns @850 | | 0.076 | 0.073 | 0.069 | 0.055 | 0.061 |
| R7.5-2 turns @1300 | | 0.416 | 0.418 | 0.391 | 0.207 | 0.239 |
| R15-2 turns @1300 | | 0.118 | 0.111 | 0.103 | 0.044 | 0.057 |

Table 2 - Structural Parameters of the Multimode Optical Fibers in Different Examples.

| Parameter | Unit | Example 1 | Example 2 | Example 3 | Example 4 | Example 5 |
|---|---|---|---|---|---|---|
| $R_0$ | μm | 25 | 25 | 25.2 | 25.5 | 26.2 |
| $n_1$ | % | 0.92 | 0.92 | 0.95 | 1.08 | 1.11 |
| $R_1-R_0$ | μm | 2.5 | 2.5 | 3.2 | 3.4 | 3 |
| $n_g$ | % | 0.07 | 0.07 | 0.085 | 0.09 | 0.088 |
| $n_u$ | % | 0 | 0 | 0.02 | 0.03 | 0.02 |
| $R_2-R_1$ | μm | / | 1 | 1.8 | 2.2 | 2.5 |
| $n_3$ | % | / | -0.09 | -0.12 | -0.16 | -0.13 |
| $R_3-R_2$ | μm | 4.8 | 4.8 | 4.2 | 4.3 | 4.6 |
| $R_4-R_3$ | μm | 4.5 | 4.5 | 4.8 | 5.2 | 5 |
| $n_4$ | % | -0.41 | -0.41 | -0.41 | -0.58 | -0.55 |
| $R_5$ | μm | 62.5 | 62.5 | 62.5 | 62.5 | 62.5 |

In the end, it should be noted that the above embodiments are only provided to explain the technical solution of the present application, but don't constitute any limitation on the present application; while the present application is described in detail above with reference to some embodiments, those having ordinary skills in the art can readily understand that various modifications can be made to the technical solutions described in the above embodiments or equivalent replacements may be made to all or a part of the technical features therein; however, such modifications or replacements do not make the essence of the corresponding technical solutions deviate from the scope of the technical solutions in the embodiments of the present application.

**Claims**

1. A high-bandwidth multimode optical fiber comprising a core layer, an inner cladding layer, a barrier layer, a depressed layer and an outer cladding layer cladded sequentially in a direction from the center of the high-bandwidth multimode optical fiber to the outer wall of the high-bandwidth multimode optical fiber, wherein
   the refraction index of the core layer is distributed in a power-exponential function in the direction from the center to the outer wall, and the center of the core layer has the largest refraction index; the refraction index of the inner cladding layer decreases gradually in the direction from the center to the outer wall; and the refraction index of the barrier layer is smaller than the refraction index of the inner cladding layer and greater than the refraction index of the depressed layer.

2. The high-bandwidth multimode optical fiber according to claim 1, wherein the barrier layer comprises a first barrier layer, and the first barrier layer is cladded on the outer wall of the inner cladding layer.

3. The high-bandwidth multimode optical fiber according to claim 1, wherein the barrier layer comprises two layers including a first barrier layer and a second barrier layer, wherein the second barrier layer is cladded on the outer wall of the inner cladding layer, and the first barrier layer is cladded on the outer wall of the second barrier layer.

4. The high-bandwidth multimode optical fiber according to claim 2 or 3, wherein the refraction index of the first barrier layer is equal to the refraction index of the outer cladding layer.

5. The high-bandwidth multimode optical fiber according to claim 3, wherein the cross section of the first barrier layer is in an annular shape in an extending direction perpendicular to the high-bandwidth multimode optical fiber, and a spacing between the outer wall and the inner wall of the first barrier layer in a radial direction is 0 to 6 $\mu$m.

6. The high-bandwidth multimode optical fiber according to claim 3, wherein a difference value between the refraction index of the second barrier layer and the refraction index of the outer cladding layer is not greater than 2%, and the refraction index of the second barrier layer is not greater than the refraction index of the outer cladding layer.

7. The high-bandwidth multimode optical fiber according to claim 3, wherein the material of the second barrier layer comprises silicon dioxide and fluorine, and the molar doping concentration of the fluorine relative to the silicon dioxide is 0.01% to 0.5%.

8. The high-bandwidth multimode optical fiber according to claim 3, wherein the cross section of the second barrier layer is in an annular shape in the extending direction perpendicular to the high-bandwidth multimode optical fiber, and a spacing between the outer wall and the inner wall of the second barrier layer in a radial direction is 0.5 to 3 $\mu$m.

9. The high-bandwidth multimode optical fiber according to any of claims 5 to 8, wherein the cross section of the core layer is in a circular shape in the extending direction perpendicular to the high-bandwidth multimode optical fiber, and the radius of the core layer is 22 to 32 $\mu$m.

10. The high-bandwidth multimode optical fiber according to any of claims 5 to 8, wherein a difference value between the refraction index of the core layer and the refraction index of the outer cladding layer is 0.9% to 1.1%, and the refraction index of the core layer is greater than the refraction index of the outer cladding layer.

11. The high-bandwidth multimode optical fiber according to any of claims 5 to 8, wherein the material of the core layer comprises silicon dioxide, germanium dioxide, fluorine and phosphorus, wherein the molar doping concentration of the fluorine relative to the silicon dioxide is 0.01% to 0.35%, the molar doping concentration of the phosphorus relative to the silicon dioxide is 0.01% to 0.3%, and the molar doping concentration of the germanium dioxide relative to the silicon dioxide is 3% to 20%.

12. The high-bandwidth multimode optical fiber according to any of claims 5 to 8, wherein the cross section of the inner cladding layer is in an annular shape in the extending direction perpendicular to the high-bandwidth multimode optical fiber, and a spacing between the outer wall and the inner wall of the inner cladding layer in a radial direction is 0.5 to 6 $\mu$m.

13. The high-bandwidth multimode optical fiber according to any of claims 5 to 8, wherein a difference value between the refraction index of the inner wall of the inner cladding layer and the refraction index of the outer cladding layer is 0.001% to 0.1%, and the refraction index of the inner wall of the inner cladding layer is greater than the refraction index of the outer cladding layer;
a difference value between the refraction index of the outer wall of the inner cladding layer and the refraction index of the outer cladding layer is 0% to 0.35%.

14. The high-bandwidth multimode optical fiber according to any of claims 5 to 8, wherein the material of the inner cladding layer comprises silicon dioxide, germanium dioxide and fluorine, wherein the molar doping concentration of the fluorine relative to the silicon dioxide is 0.01% to 0.35%, and the molar doping concentration of the germanium dioxide relative to the silicon dioxide is 0.2% to 4%.

15. The high-bandwidth multimode optical fiber according to any of claims 5 to 8, wherein the cross section of the depressed layer is in an annular shape in the extending direction perpendicular to the high-bandwidth multimode optical fiber, and a spacing between the outer wall and the inner wall of the depressed layer in a radial direction is 2.5 to 6.5 $\mu$m.

16. The high-bandwidth multimode optical fiber according to any of claims 5 to 8, wherein a difference value between the refraction index of the depressed layer and the refraction index of the outer cladding layer is 0.3% to 0.6%, and the refraction index of the depressed layer is smaller than the refraction index of the outer cladding layer.

17. The high-bandwidth multimode optical fiber according to any of claims 5 to 8, wherein the material of the depressed layer comprises silicon dioxide and fluorine, and the molar doping concentration of the fluorine relative to the silicon dioxide is 0.5% to 1.5%.

Fig. 1

Fig. 2

Fig. 3

Fig. 4

Fig. 5

Fig. 6

## INTERNATIONAL SEARCH REPORT

| | International application No. |
| --- | --- |
| | **PCT/CN2024/106751** |

**A.    CLASSIFICATION OF SUBJECT MATTER**

G02B6/028(2006.01)i

According to International Patent Classification (IPC) or to both national classification and IPC

**B.    FIELDS SEARCHED**

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNTXT, ENTXTC, WPABS, CNKI, ENTXT: 光纤, 带宽 2d 高, 芯, 幂, 指数, 内包, 外包, 凹, 槽, 陷, 多模, 折射率, 逐渐, optical fiber, high w bandwidth, core layer, inner clad+, barrier, outer clad+, refractive index, exponential function

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117348148 A (ZHONGTIAN TECHNOLOGIES PRECISION MATERIAL CO., LTD. et al.) 05 January 2024 (2024-01-05) claims 1-17, description, paragraphs [0041]-[0102], and figures 1-6 | 1-17 |
| Y | CN 102073099 A (DRAKA COMTEQ BV) 25 May 2011 (2011-05-25) description, paragraphs [0072]-[0139], and figures 1-5 | 1-17 |
| Y | CN 111221073 A (ZHONGTIAN TECHNOLOGIES PRECISION MATERIAL CO., LTD. et al.) 02 June 2020 (2020-06-02) description, paragraphs [0030]-[0050], and figures 1-5 | 1-17 |
| A | CN 116256837 A (YANGTZE OPTICAL FIBRE AND CABLE JOINT STOCK LIMITED COMPANY) 13 June 2023 (2023-06-13) entire document | 1-17 |
| A | CN 115826130 A (JIANGSU HENGTONG OPTICAL FIBER TECHNOLOGY CO., LTD. et al.) 21 March 2023 (2023-03-21) entire document | 1-17 |
| A | US 2014352361 A1 (CORNING INC.) 04 December 2014 (2014-12-04) entire document | 1-17 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 October 2024** | **24 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/106751** |

**C. DOCUMENTS CONSIDERED TO BE RELEVANT**

| Category* | Citation of document, with indication, where appropriate, of the relevant passages | Relevant to claim No. |
|---|---|---|
| A | CN 104793285 A (WUHAN RESEARCH INSTITUTE of POSTS and TELECOMMUNICATIONS et al.) 22 July 2015 (2015-07-22)<br>entire document | 1-17 |
| A | CN 116009141 A (FIBERHOME TELECOMMUNICATION TECHNOLOGIES CO., LTD. et al.) 25 April 2023 (2023-04-25)<br>entire document | 1-17 |

Form PCT/ISA/210 (second sheet) (July 2022)

**INTERNATIONAL SEARCH REPORT**
Information on patent family members

International application No.

**PCT/CN2024/106751**

| Patent document cited in search report | | | Publication date (day/month/year) | Patent family member(s) | | | Publication date (day/month/year) |
|---|---|---|---|---|---|---|---|
| CN | 117348148 | A | 05 January 2024 | CN | 117348148 | B | 22 March 2024 |
| CN | 102073099 | A | 25 May 2011 | US | 2011123162 | A1 | 26 May 2011 |
| | | | | US | 8483535 | B2 | 09 July 2013 |
| | | | | JP | 2011113095 | A | 09 June 2011 |
| | | | | JP | 5732234 | B2 | 10 June 2015 |
| | | | | FR | 2953030 | A1 | 27 May 2011 |
| | | | | FR | 2953030 | B1 | 18 November 2011 |
| | | | | EP | 2333594 | A1 | 15 June 2011 |
| | | | | EP | 2333594 | B1 | 02 January 2013 |
| CN | 111221073 | A | 02 June 2020 | WO | 2021128563 | A1 | 01 July 2021 |
| CN | 116256837 | A | 13 June 2023 | | None | | |
| CN | 115826130 | A | 21 March 2023 | WO | 2024119527 | A1 | 13 June 2024 |
| US | 2014352361 | A1 | 04 December 2014 | US | 9975802 | B2 | 22 May 2018 |
| | | | | WO | 2014193801 | A1 | 04 December 2014 |
| CN | 104793285 | A | 22 July 2015 | US | 2017115450 | A1 | 27 April 2017 |
| | | | | US | 9739936 | B2 | 22 August 2017 |
| | | | | KR | 20170047217 | A | 04 May 2017 |
| | | | | KR | 101957612 | B1 | 12 March 2019 |
| | | | | WO | 2016173232 | A1 | 03 November 2016 |
| | | | | CA | 2954451 | A1 | 03 November 2016 |
| | | | | CA | 2954451 | C | 30 April 2019 |
| | | | | JP | 2017526960 | A | 14 September 2017 |
| | | | | EP | 3141938 | A1 | 15 March 2017 |
| | | | | EP | 3141938 | B1 | 31 July 2019 |
| CN | 116009141 | A | 25 April 2023 | WO | 2024164515 | A1 | 15 August 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311648463